Europäisches Patentamt

European Patent Office

Office européen des brevets

(11) Veröffentlichungsnummer: **0 172 569**
**A2**

(12) **EUROPÄISCHE PATENTANMELDUNG**

(21) Anmeldenummer: **85110483.6**

(22) Anmeldetag: **21.08.85**

(51) Int. Cl.⁴: **G 06 F 11/16**

(30) Priorität: **24.08.84 DE 3431169**

(43) Veröffentlichungstag der Anmeldung:
**26.02.86 Patentblatt 86/9**

(84) Benannte Vertragsstaaten:
**AT CH DE LI**

(71) Anmelder: **International Standard Electric Corporation**
**320 Park Avenue**
**New York New York 10022(US)**

(84) Benannte Vertragsstaaten:
**CH LI AT**

(71) Anmelder: **Standard Elektrik Lorenz Aktiengesellschaft**
**Lorenzstrasse 10**
**D-7000 Stuttgart 40(DE)**

(84) Benannte Vertragsstaaten:
**DE**

(72) Erfinder: **Mack, Heinz**
**Schubertstrasse 8**
**D-7258 Heimsheim(DE)**

(72) Erfinder: **Schwarzwälder, Jörg**
**Unter dem Greut 9**
**D-7257 Ditzingen(DE)**

(74) Vertreter: **Pechhold, Eberhard, Dipl.-Phys. et al,**
**c/o Standard Elektrik Lorenz AG Patent- und**
**Lizenzwesen Kurze Strasse 8 Postfach 300 929**
**D-7000 Stuttgart 30(DE)**

(54) Verfahren zur Synchronisation mehrerer parallelarbeitender Rechner.

(57) Es wird ein Verfahren zur Synchronisation meherer parallelarbeitender, mit getrennten Taktgebern ausgestatteter Rechner angegeben, das einen Verzicht auf sämtliche zentralen Einheiten gestattet. Jeder Rechner gibt an bestimmten Stellen des abzuarbeitenden Programmes ein besonderes Signal an alle anderen Rechner aus. Jeder Rechner unterbricht auf ein von einem anderen Rechner her empfangenes derartiges Signal sein Programm und gibt seinerseits ein Signal an alle anderen rechner aus. Jeder Rechner beginnt mit der Abarbeitung des nächsten Programmshrittes wenn Signale aller anderen Rechner vorliegen.

Croydon Printing Company Ltd.

H.Mack - J.Schwarzwälder 1-12


Verfahren zur Synchronisation mehrerer parallelarbeitender Rechner


Die Erfindung betrifft ein Verfahren zur Synchronisation
mehrerer parallelarbeitender, mit internen Taktgebern ausgestatteter Rechner.


In Datenverarbeitungsanlagen,in denen - beispielsweise
zur Steuerung von Eisenbahnsignalanlagen - die Verarbeitung sicherheitskritischer Information erfolgt, werden oft
mehrere für sich nicht signaltechnisch sicher arbeitende
Rechner eingesetzt, welche dieselben Daten parallel verarbeiten. Verarbeitungsergebnisse solcher Datenverarbeitungsanlagen werden nur dann als signaltechnisch sicher
angesehen, wenn sie von mindestens zwei Rechnern identisch vorliegen. Der Vergleich der Ergebnisse der einzelnen Rechner erfolgt entweder nach jedem einzelnen Bit oder
nach bestimmten vorgegebenen Programmabschnitten. Um jederzeit einen Vergleich durchführen zu können, müssen
die Rechner synchron arbeiten. Dieser Synchronismus kann
Bit für Bit bestehen (Mikrosynchronismus) und z.B. durch
einen einzigen gemeinsamen Taktgeber, der seine Taktimpulse gleichzeitig auf alle Rechner ausgibt, sichergestellt sein. Da bei einem im Mikrosynchronismus arbeiten-


ZT/P1-P/Bl

23.08.1984                                                    -3-

H.Mack - J.Schwarzwälder 1-12

den Mehrrechnersystem die Gefahr besteht, daß Störungen, die gleichzeitig auf alle Rechner einwirken, Fehler verursachen, die nicht erkannt werden, wurde in der DE-OS 27 25 922 eine zeitlich versetzte Arbeitsweise der Rechner eingeführt, bei der eine Synchronisation nur noch zum Vergleich nach bestimmten Programmabschnitten erfolgt. Die Taktversorgung der Rechner wird hier ebenfalls mit Hilfe eines gemeinsamen Taktgebers vorgenommen, der jedoch seine Taktimpulse den einzelnen Rechnern über Verzögerungsglieder zuführt und hierdurch deren asynchronen Lauf sicherstellt.

Mit dem Ausfall des Taktgebers ist in diesem Fall der Ausfall der gesamten Datenverarbeitungsanlage verbunden. Dies führt zwar nicht zu einem sicherheitsgefährdenden Zustand, aber zu einer Betriebshemmung, die nicht nur unerwünscht, sondern auch gefährlich ist, da der Betrieb (z.B. bei der Bahn) dann zumeist durch weniger gesicherte Handlungen und unter direkter Einflußnahme von Menschen fortgesetzt werden muß.

Aufgabe der Erfindung ist deshalb ein Verfahren, das die Synchronisation mehrerer Rechner ohne die Verwendung zentraler Bauteile ermöglicht.

Eine Lösung dieser Aufgabe stellt das Verfahren gemäß den Merkmalen des Patentanspruchs 1 dar. Es ermöglicht die Synchronisation mehrerer Rechner, denen getrennte eigene Taktgeber zugeordnet sind, ohne jede zusätzliche, zentral wirkende Hardware und ohne größeren zusätzlichen Aufwand. Vor allem für Mikrorechner mit internen Taktgebern eignet sich das erfindungsgemäße Synchronisationsverfahren. Ein nach dem erfindungsgemäßen Verfahren betriebenes Mehrrechnersystem ist weit zuverlässiger als ein herkömmliches, mit zentralem Taktgeber ausgestattetes System, da bei Ausfall eines Taktgebers lediglich der diesem Taktgeber zugeordnete Rechner nicht mehr arbeitet und der Betrieb mit den verbleibenden Rechnern fortgeführt werden kann. Bei einem System mit drei oder mehr Rechnern kann auch noch nach Ausfall eines Rechners signaltechnisch sicher weitergearbeitet werden.

Eine im Anspruch 2 beschriebene Ausgestaltung des erfindungsgemäßen Verfahrens ermöglicht eine automatische Fortführung des Betriebes bei Ausfall eines Rechners oder eines Taktgebers.

Anhand einer Figur soll nun das erfindungsgemäße Verfahren ausführlich beschrieben werden.

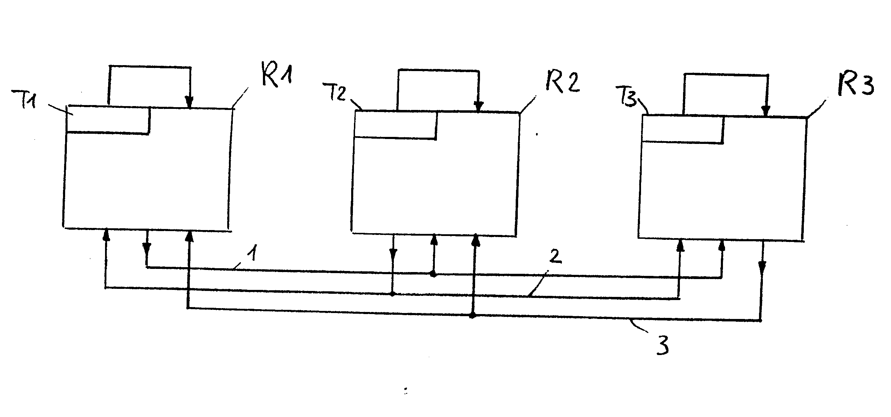

Die Figur zeigt ein Drei-Rechner-System bestehend aus drei mit internen Taktgebern T1 ... T3 ausgestatteten Mikrorechnern R1 ... R3.

Alle Rechner erhalten parallel dieselbe Eingangsinformation. Diese wird von allen drei Rechnern nach bestimmten Programmen abschnittsweise verarbeitet. Die Programme können dabei identisch sein, einzelne Programmabschnitte können sich aber auch voneinander unterscheiden, wenn sichergestellt ist, daß diese zu gleichen Zwischenergebnissen führen und diese Zwischenergebnisse ausreichend häufig vorliegen, um einen Ergebnisvergleich in kurzen Abständen durchführen zu können.

Ein solcher Ergebnisvergleich erfolgt ebenfalls parallel in allen drei Rechnern nach vorherigem gegenseitigem Austausch der Rechenergebnisse.

H.Mack - J.Schwarzwälder 1-12

Die Synchronisation der Rechner zum Vergleich wird durch Interruptsignale ausgelöst, deren Ausgabe an bestimmten Stellen in die Rechnerprogramme einprogrammiert ist. Kommt der schnellste Rechner, z.B. der Rechner R1, an eine solche Stelle in seinem Programm, so gibt er ein Interruptsignal über die Datenleitung 1 an die beiden anderen Rechner R2 und R3 ab. Anschließend unterbricht er sein Programm. Die Rechner R2 und R3 rechnen weiter bis zur nächsten für eine Programmunterbrechung geeigneten, im Programm markierten Stelle. Danach geben sie ihrerseits über die Datenleitungen 2 bzw. 3 ein Interruptsignal an alle Nachbarrechner aus. Der Rechner R1 beginnt mit dem nächsten Programmschritt erst, wenn Interruptsignale der Rechner R2 und R3 vorliegen. Ebenso rechnet der Rechner R2 erst weiter, wenn neben dem Interruptsignal des Rechners R1 auch ein Interruptsignal des Rechners R3 empfangen wurde. Der Rechner R3 verhält sich wie Rechner R2 und wartet dessen Interruptsignal ab. Der Start der drei Rechner erfolgt nun völlig synchron bei Eingang des letzten Interruptsignals.

Eine solche Synchronisation wird in der Regel am Ende eines Programmabschnittes vorgenommen, so daß sich der Vergleich der Zwischenergebnisse unmittelbar anschließen kann.

Alle drei Rechner sind bei dem erfindungsgemäßen Verfahren gleichberechtigt. Jeder der Rechner kann das die Synchronisation auslösende erste Interruptsignal ausgeben.

Fällt einer der drei Rechner aus, so fehlt sein Interruptsignal. Die beiden intakten Rechner warten dann zu-

H.Mack - J.Schwarzwälder 1-12

nächst eine vorgegebene Zeitspanne, dann schalten sie auf
ein Ersatzprogramm um, welches die Weiterführung der zu
erfüllenden Steuerungsaufgabe mit nur zwei Rechnern ermöglicht. Der defekte Rechner wird abgeschaltet.

H.Mack - J.Schwarzwälder 1-12

Patentansprüche

1. Verfahren zur Synchronisation mehrerer parallelarbeitender, mit voneinander unabhängigen Taktgebern ausgestatteter Rechner, deren Ergebnisse nach vorgegebenen Programmabschnitten miteinander verglichen und nur bei Übereinstimmung weiterverarbeitet werden, d a - d u r c h   g e k e n n z e i c h n e t , daß jeder Rechner an bestimmten Stellen des von ihm abzuarbeiten- den Programmes ein besonderes Signal an alle anderen Rechner ausgibt, daß jeder Rechner auf ein von einem der anderen Rechner her empfangenes derartiges Signal mit einer Unterbrechung seines Programmes an der nächsten zum Ergebnisvergleich geeigneten Stelle reagiert und seinerseits ein Signal an alle anderen Rechner ausgibt und daß jeder Rechner die Abarbeitung des nächsten Programmschrittes beginnt, wenn Signale aller anderen Rechner vorliegen.

2. Verfahren nach Anspruch 1, dadurch gekennzeichnet, daß jeder Rechner die Abarbeitung des nächsten Programmschrittes auch dann beginnt, wenn ein Signal eines weiteren Rechners vorliegt und eine bestimmte vorgege- bene Zeit verstrichen ist.

ZT/P1-P/Bl
23.08.1984                                                    -2-

0172569